# EUROPEAN PATENT APPLICATION

(11) **EP 4 422 060 A1**
(43) Date of publication of application: **28.08.2024**
(21) Application number: 21961372.6
(22) Date of filing: 20.10.2021
(51) Int. Cl.: H02M 7/49

(54) **POWER CONVERSION APPARATUS**

(71) Applicant: TOSHIBA MITSUBISHI-ELECTRIC INDUSTRIAL SYSTEMS CORPORATION, Chuo-ku Tokyo 104-0031 (JP)
(72) Inventor: TSUCHIYA, Taichiro, Tokyo 104-0031 (JP); ISOZAKI, Jumpei, Tokyo 104-0031 (JP)
(74) Representative: Winter, Brandl - Partnerschaft mbB
(86) International application number: PCT/JP2021/038736
(87) International publication number: WO 2023/067719

(57) **Abstract**

A switch device (52) includes a switch (SW) configured to cause short-circuiting between output terminals of a main circuit (30) by being turned on. A control circuit (33) is configured to turn on the switch (SW) when it receives an on command to turn on the switch (SW) from a control device (120) and to transmit on and off states of the switch (SW) to the control device (120). When the control device (120) detects abnormality between the control device and the control circuit (32) in any cell (10) of a plurality of cells (10), it transmits the on command to turn on the switch (SW) to the control circuit (33) of the cell (10) where the abnormality has been detected.

## Description

### TECHNICAL FIELD

The present disclosure relates to a power conversion device, and more particularly to a power conversion device including an arm configured with a plurality of unit converters connected in series.

### BACKGROUND ART

In recent years, the use of MMCs (Modular Multilevel Converters) has been contemplated in self-commutated static var compensators such as STATCOM (Static Synchronous Compensator), direct-current (DC) transmission systems such as BTB (Back to Back) system, and motor drive inverters (for example, see WO2016/203516 (PTL 1)).

The MMC includes an arm configured with a plurality of unit converters connected in series. Each unit converter includes a switching element and a DC capacitor. The unit converter allows the switching element to perform switching operation to output voltage of the DC capacitor to the output terminal. In general, a semiconductor switching element capable of on/off control, such as IGBT (Insulated Gate Bipolar Transistor), is used as a switching element. In control of the MMC, communication for transmission of various control signals is established between a plurality of unit converters and a control device.

### CITATION LIST

### PATENT LITERATURE

PTL 1: WO2016/203516

### SUMMARY OF INVENTION

### TECHNICAL PROBLEM

When a circuit involved with control and protection of a unit converter fails, however, the unit converter and the control device may be unable to communicate with each other and the control device may be unable to deactivate the unit converter. Alternatively, the control device may be unable to confirm whether or not the unit converter has been deactivated. In this case, operations of a power conversion device are stopped.

The present disclosure was made to solve problems described above, and an object thereof is to more reliably continue operations of a power conversion device including an arm configured with a plurality of unit converters connected in series even when a unit converter fails in the power conversion device.

### SOLUTION TO PROBLEM

A power conversion device according to the present disclosure includes a power converter and a control device. The power converter includes an arm configured with a plurality of unit converters connected in series. The control device controls the power converter. Each of the plurality of unit converters includes a main circuit, a switch device, a main circuit control circuit, and a switch control circuit. The main circuit includes a switching element and a DC capacitor. The main circuit outputs a voltage pulse in accordance with a voltage of the DC capacitor based on on and off of the switching element. The switch device includes a switch configured to cause short-circuiting between output terminals of the main circuit by being turned on. The switch device outputs on and off states of the switch. The main circuit control circuit is configured to transmit a voltage detection value of the DC capacitor to the control device and to control on and off of the switching element in accordance with a control signal received from the control device. The switch control circuit is configured to turn on the switch when the switch control circuit receives an on command to turn on the switch from the control device and to transmit the on and off states of the switch to the control device. When the control device detects abnormality between the control device and the main circuit control circuit in any unit converter of the plurality of unit converters, it transmits the on command to turn on the switch to the switch control circuit of the unit converter where abnormality has been detected.

### ADVANTAGEOUS EFFECTS OF INVENTION

According to the present disclosure, even when a unit converter fails in a power conversion device including an arm configured with a plurality of unit converters connected in series, operations of the power conversion device can more reliably continue.

### BRIEF DESCRIPTION OF DRAWINGS

Fig. 1 is a diagram of an overall configuration of a power conversion device according to the present embodiment.
Fig. 2 is a diagram showing an exemplary configuration of a cell shown in Fig. 1.
Fig. 3 is a diagram illustrating an operating state of the power conversion device when all cells in an arm are normally operating.
Fig. 4 is a diagram illustrating an operating state of the power conversion device when abnormality occurs in one cell in the arm.
Fig. 5 is a diagram for illustrating supply of electric power to a control circuit in the cell shown in Fig. 2.
Fig. 6 is a flowchart for illustrating a process when abnormality occurs in a main circuit.
Fig. 7 is a diagram showing another exemplary configuration of the cell shown in Fig. 1.

### DESCRIPTION OF EMBODIMENTS

An embodiment will be described below with reference to the drawings. In the description below, the same elements have the same reference characters allotted and their labels and functions are also the same. Therefore, detailed description thereof will not be repeated.

### [Configuration of Power Conversion Device 100]

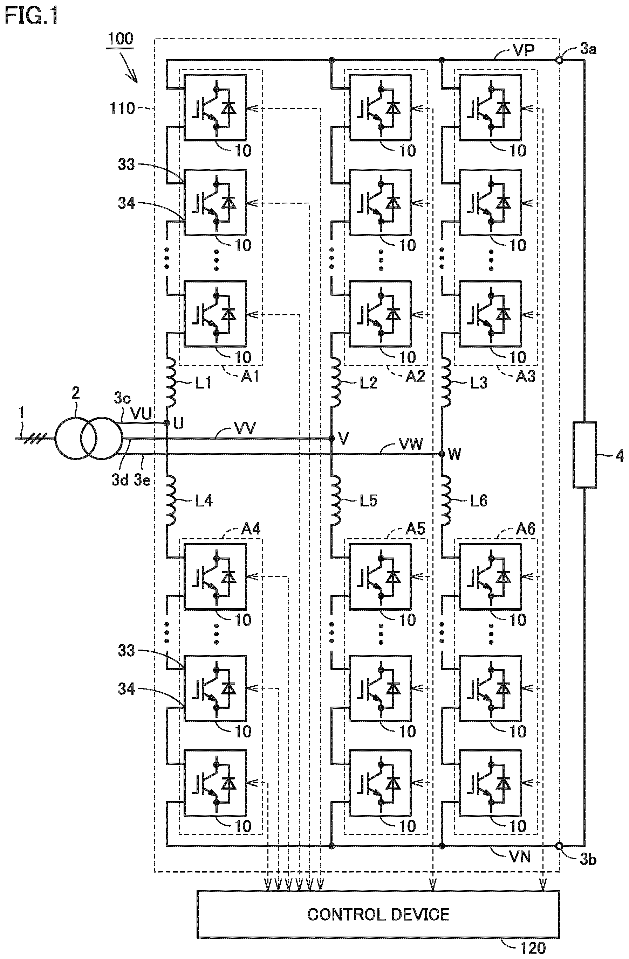

Fig. 1 is a diagram of an overall configuration of a power conversion device 100 according to the present embodiment. Referring to Fig. 1, power conversion device 100 includes a modular multilevel converter (MMC) 110 and a control device 120 that controls MMC 110.

MMC 110 includes a positive voltage terminal 3a, a negative voltage terminal 3b, and three alternating-current (AC) terminals 3c to 3e. MMC 110 is a bidirectional power conversion device that converts any one of DC power and three-phase AC power to the other. Positive voltage terminal 3a and negative voltage terminal 3b are used for supply and reception of DC power. Three AC terminals 3c to 3e are used for supply and reception of three-phase AC power. MMC 110 corresponds to one embodiment of the "power converter" in the present embodiment.

Positive voltage terminal 3a and negative voltage terminal 3b are connected to a load 4. A DC load, a DC power supply, a motor drive inverter, and the like are applied as load 4.

Three AC terminals 3c to 3e are connected to three secondary-side terminals of a three-phase transformer 2, respectively. Three-phase transformer 2 has a primary-side terminal connected to a three-phase power transmission line of an AC power grid 1 with a not-shown breaker being interposed. The breaker is rendered conducting in a normal operation, and rendered non-conducting when a short-circuiting fault occurs, for example, between terminals 3a and 3b.

In supply of electric power from AC power grid 1 to load 4, three-phase AC power of AC power grid 1 is supplied to MMC 110 through three-phase transformer 2. MMC 110 converts three-phase AC power to DC power. Resultant DC power is supplied to load 4. In other words, MMC 110 operates as an AC-DC conversion device that converts AC power to DC power.

In supply of electric power from load 4 to AC power grid 1, on the other hand, DC power is supplied from load 4 to MMC 110. MMC 110 converts DC power to three-phase AC power. Resultant three-phase AC power is supplied to AC power grid 1 through three-phase transformer 2. In other words, MMC 110 operates as a DC-AC conversion device that converts DC power to AC power.

MMC 110 further includes an arm A (arms A1 to A6) and reactors L1 to L6. Arms A1 to A3 have one terminals connected together to positive voltage terminal 3a and have the other terminals connected to respective one terminals of reactors L1 to L3. Reactors L1 to L3 have the other terminals connected to respective AC terminals 3c to 3e.

Arms A4 to A6 have one terminals connected together to negative voltage terminal 3b and have the other terminals connected to respective one terminals of reactors L4 to L6. Reactors L4 to L6 have the other terminals connected to respective AC terminals 3c to 3e.

Positive voltage terminal 3a is supplied with a positive DC voltage VP from MMC 110 and load 4. Negative voltage terminal 3b is supplied with a negative DC voltage VN from MMC 110 and load 4. AC terminal 3c is supplied with a U-phase AC voltage VU from three-phase transformer 2 and MMC 110. AC terminal 3d is supplied with a V-phase AC voltage VV from three-phase transformer 2 and MMC 110. AC terminal 3e is supplied with a W-phase AC voltage VW from three-phase transformer 2 and MMC 110. Phases of three-phase AC voltages VU, VV, and VW are shifted from one another by 120 degrees.

Arms A1 and A4 implement a U-phase module that bidirectionally converts electric power between U-phase AC voltage VU and DC voltages VP and VN. Arms A2 and A5 implement a V-phase module that bidirectionally converts electric power between V-phase AC voltage VV and DC voltages VP and VN. Arms A3 and A6 implement a W-phase module that bidirectionally converts electric power between W-phase AC voltage VW and DC voltages VP and VN.

Reactors L1 to L6 each have an inductance set to a value necessary for controlling a current that flows in each arm A and for suppressing a circulating current that flows among modules of three phases when AC voltages VU, VV, and VW are different from one another in amplitude.

### [Configuration of Unit Converter]

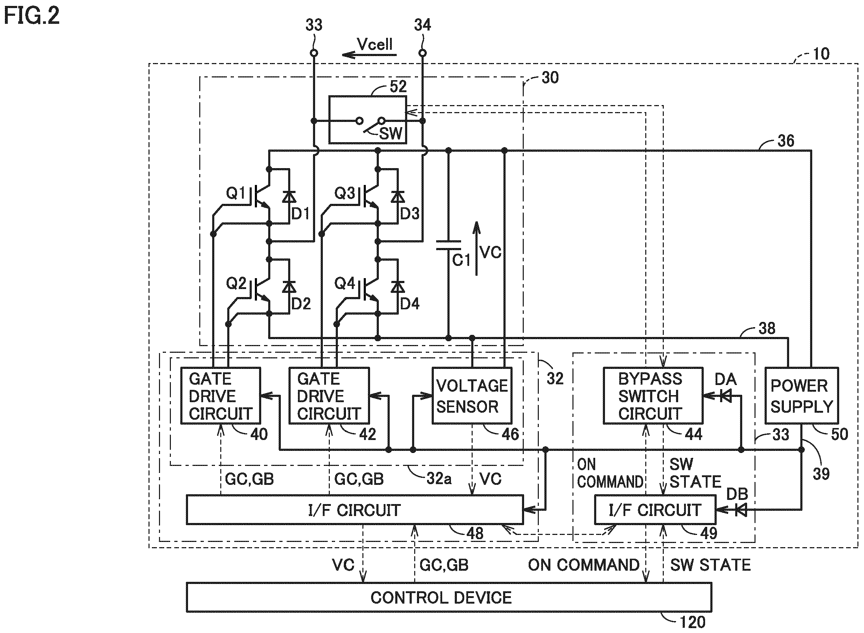

Each of arms A1 to A6 includes a plurality of cascaded unit converters (which are also referred to as cells below) 10. Fig. 2 is a diagram showing an exemplary configuration of cell 10 shown in Fig. 1. Referring to Fig. 2, each of the plurality of cells 10 included in each arm A includes a main circuit 30, a switch device 52, a control circuit 32 (which is also referred to as a "main circuit control circuit"), a control circuit 33 (which is also referred to as a "switch control circuit"), and a power supply 50.

Control circuit 32 is configured with a control circuit 32a (which is also referred to as a "first control circuit") and an interface (I/F) circuit 48 (which is also referred to as a "first interface circuit"). Control circuit 33 is configured with a bypass switch circuit 44 (which is also referred to as a "second control circuit") and an interface (I/F) circuit 49 (which is also referred to as a "second interface circuit").

Control circuit 32a controls main circuit 30. I/F circuit 48 relays communication between control circuit 32a and control device 120. Bypass switch circuit 44 controls switch device 52. I/F circuit 49 relays communication between bypass switch circuit 44 and control device 120.

Main circuit 30 is configured with a full-bridge circuit including a DC capacitor. Specifically, main circuit 30 is a two-terminal circuit including a first terminal 33 and a second terminal 34. Main circuit 30 includes switching elements Q1 to Q4, diodes D1 to D4, and a DC capacitor C1.

Switching elements Q1 to Q4 are each a self-commutated power semiconductor element and implemented, for example, by an IGBT. Switching elements Q1 and Q2 are connected in series between a power line pair (a positive electrode line 36 and a negative electrode line 38). Switching elements Q3 and Q4 are connected in series between the power line pair. Switching elements Q1 and Q3 have collectors connected together to positive electrode line 36 and switching elements Q2 and Q4 have emitters connected together to negative electrode line 38. A point of connection between an emitter of switching element Q1 and a collector of switching element Q2 is connected to first terminal 33. A point of connection between an emitter of switching element Q3 and a collector of switching element Q4 is connected to second terminal 34.

Diodes D1 to D4 are connected in anti-parallel to switching elements Q1 to Q4, respectively. DC capacitor C1 is connected between positive electrode line 36 and negative electrode line 38. DC capacitor C1 smoothens an output from the full-bridge circuit.

As shown in Fig. 1, cells 10 located at one ends of arms A1 to A3 have first terminals 33 connected together to positive voltage terminal 3a. In arms A1 to A3, second terminal 34 of each cell 10 is connected to first terminal 33 of cell 10 adjacent on a side of AC terminals 3c to 3e. Cells 10 located at the other ends of arms A1 to A3 have second terminals 34 connected to one terminals of reactors L1 to L3, respectively.

Cells 10 located at one ends of arms A4 to A6 have first terminals 33 connected to one terminals of reactors L4 to L6, respectively. In arms A4 to A6, second terminal 34 of each cell 10 is connected to first terminal 33 of cell 10 adjacent on a side of negative voltage terminal 3b. Cells 10 located at the other ends of arms A4 to A6 have second terminals 34 connected together to negative voltage terminal 3b.

In cell 10, switching elements Q1 and Q2 alternately turn on and off. Switching elements Q3 and Q4 alternately turn on and off. As shown in Fig. 2, when a voltage to first terminal 33 with second terminal 34 being defined as the reference is defined as a cell voltage Vcell, cell voltage Vcell is controlled based on on and off states of switching elements Q1 to Q4.

Specifically, when switching elements Q1 and Q2 are turned on and off, respectively, and switching elements Q3 and Q4 are turned off and on, respectively, cell voltage Vcell is substantially equal to a voltage VC of DC capacitor C1. When switching elements Q1 and Q2 are turned on and off, respectively, and switching elements Q3 and Q4 are turned on and off, respectively, cell voltage Vcell is substantially zero. When switching elements Q1 and Q2 are turned off and on, respectively, and switching elements Q3 and Q4 are turned off and on, respectively, cell voltage Vcell is substantially zero. When switching elements Q1 and Q2 are turned off and on, respectively, and switching elements Q3 and Q4 are turned on and off, respectively, cell voltage Vcell is substantially equal to a voltage reverse in polarity to voltage VC of DC capacitor C1.

When switching elements Q1 to Q4 are all turned off, cell voltage Vcell is determined depending on polarity of a current that flows in cell 10. When the current is positive, cell voltage Vcell is substantially equal to voltage VC of DC capacitor C1. When the current is negative, cell voltage Vcell is substantially equal to a voltage reverse in polarity to voltage VC of DC capacitor C1.

A voltage across two terminals of each arm A is expressed with a sum of cell voltages Vcell of cells 10 included in this arm A. Therefore, a voltage of each arm A can be controlled by the on and off states of switching elements Q1 to Q4 that compose cell 10.

Control circuit 32a includes gate drive circuits 40 and 42 and a voltage sensor 46. I/F circuits 48 and 49 communicate with control device 120 through a not-shown optical fiber cable. I/F circuit 48 receives from control device 120, a gate signal GC for control of the full-bridge circuit in main circuit 30. I/F circuit 48 further receives from control device 120, a gate block signal GB for stopping (fully turning off) switching operations of switching elements Q1 to Q4 that compose the full-bridge circuit. I/F circuit 48 outputs received gate signal GC and gate block signal GB to gate drive circuits 40 and 42.

Gate drive circuit 40 controls on and off of switching elements Q1 and Q2 in response to gate signal GC. Alternatively, gate drive circuit 40 sets switching elements Q1 and Q2 to a state fixed to the off state (stopped state) in response to gate block signal GB.

Gate drive circuit 42 controls on and off of switching elements Q3 and Q4 in response to gate signal GC. Alternatively, gate drive circuit 42 sets switching elements Q3 and Q4 to a state fixed to the off state in response to gate block signal GB.

Voltage sensor 46 detects voltage VC of DC capacitor C1 and outputs a detection value to I/F circuit 48. I/F circuit 48 transmits voltage VC detected by voltage sensor 46 to control device 120.

Power supply 50 is connected in parallel to DC capacitor C1. Power supply 50 generates a power supply voltage to be supplied to control circuits 32 and 33 by downconverting voltage VC of DC capacitor C1 (main circuit power feed). In other words, each cell 10 can supply electric power from main circuit 30 to control circuit 32 and forms a self-feeding cell.

Control device 120 controls power conversion in main circuit 30 of each cell 10 by communicating with I/F circuit 48 in each cell 10. At this time, control device 120 has DC capacitor C1 in each cell 10 charged to a predetermined DC voltage by controlling power conversion based on the detection value of voltage VC of DC capacitor C1 in each cell 10.

Control device 120 adopts, for example, pulse width modulation (PWM) control as a method of control of switching elements Q1 to Q4 in each cell 10. When control device 120 receives the detection value of voltage VC of DC capacitor C 1 from I/F circuit 48 in each cell 10 and receives a detection value of a current that flows in AC power grid 1 from a not-shown current sensor, it generates gate signal GC for controlling switching elements Q1 to Q4 in each cell 10 under PWM control based on these detection values.

Control device 120 senses abnormality of voltage VC by monitoring the detection value of voltage VC of DC capacitor C1 in each cell 10. For example, when any disturbance occurs in AC power grid 1 with which power conversion device 100 is interconnected, the disturbance may make three-phase AC power supplied to power conversion device 100 unsteady. Thus, in each cell 10, voltage VC of DC capacitor C1 fluctuates. When voltage VC fluctuates, control of switching elements Q1 to Q4 becomes unstable and hence an overvoltage exceeding a withstand voltage may be applied to the switching element. Consequently, the switching element may be damaged.

In order to protect the switching element from such a trouble, control device 120 senses abnormality of voltage VC of DC capacitor C1 based on the detection value of voltage VC transmitted from each cell 10. Specifically, control device 120 compares the detection value of voltage VC with a threshold voltage DCOV1 (a first threshold voltage) set in advance for each cell 10. Then, when control device 120 determines that voltage VC exceeds threshold voltage DCOV1 in at least one cell 10, it generates gate block signal GB for all cells 10 included in MMC 110.

Since main circuit 30 is thus set to a gate blocked state (stopped state) in response to gate block signal GB in each cell 10 of MMC 110, switching elements Q1 to Q4 are protected against the overvoltage. Since the switching element may be damaged by the overvoltage, control device 120 immediately outputs gate block signal GB to all cells 10 included in MMC 110 so as to set main circuit 30 in each cell 10 to the gate blocked state.

Main circuit 30 further includes switch device 52. Switch device 52 includes a switch SW and an excitation coil. Switching element SW is connected between first terminal 33 and second terminal 34. Switch SW is configured to cause short-circuiting between first terminal 33 and second terminal 34 by being turned on (being closed) in accordance with an on command (a closing command) from bypass switch circuit 44. In other words, outputs of cell 10 can be short-circuited by turn-on of switch SW. Switch SW corresponds to one embodiment of the "switch" in the present invention. Switch device 52 may be provided as an independent device not included in main circuit 30.

Bypass switch circuit 44 is a circuit for controlling on and off of switch SW and detecting on and off states (which are also referred to as an "SW state") of switch SW provided from switch device 52. Bypass switch circuit 44 is configured to control, in accordance with a command from control device 120, power conduction to the excitation coil of switch device 52 provided such that switch SW is turned off (opened) while power is not conducting.

Since supply of a current to the excitation coil is stopped in the normal operation, switch SW is set to the off state. When control device 120 detects abnormality between control device 120 and control circuit 32 in any cell 10 of the plurality of cells 10 included in each arm A, on the other hand, it transmits an on command to turn on switch SW to control circuit 33 of cell 10 where abnormality has been detected. Abnormality is detected when a short-circuiting fault of a switching element or abnormality in communication with I/F circuit 48 occurs.

In cell 10 where abnormality such as a failure occurs, I/F circuit 49 receives the on command and outputs the on command to bypass switch circuit 44. As bypass switch circuit 44 supplies a current to the excitation coil in accordance with the on command, switch SW is turned on. Outputs of cell 10 where abnormality such as a failure occurs are thus short-circuited, so that cell 10 is deactivated.

Bypass switch circuit 44 detects the on and off states (SW state) of switch SW provided from switch device 52. When switch SW is turned on, bypass switch circuit 44 detects a condition that the SW state of switch SW is the on state. I/F circuit 49 receives the SW state of switch SW from bypass switch circuit 44 and transmits the SW state to control device 120.

As described above, control circuit 32 transmits voltage VC of DC capacitor C1 to control device 120 and controls on and off of switching elements Q1 to Q4 in accordance with the control signal received from control device 120. When control device 120 detects abnormality such as a failure between control device 120 and control circuit 32 in any cell 10 of the plurality of cells 10, it transmits the on command to turn on switch SW to control circuit 33. When control circuit 33 receives the on command to turn on switch SW from control device 120, it turns on switch SW and transmits the on and off states (SW state) of switch SW to control device 120.

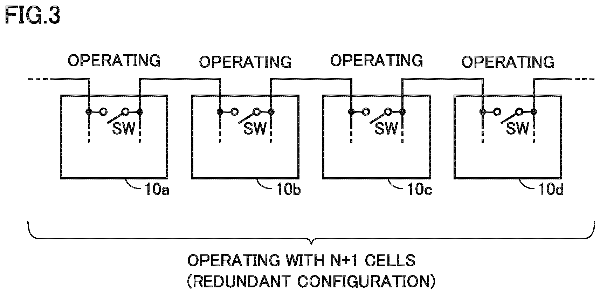

Control device 120 constantly monitors states of all cells 10 included in power conversion device 100. Fig. 3 is a diagram illustrating an operating state of power conversion device 100 when all cells in an arm are normally operating.

Power conversion device 100 includes redundant cell 10 in order to normally operate even on the occurrence of a failure. For example, it is assumed that, in each arm A, N+1 cells 10 are operating to generate a voltage of each arm A. It is assumed that each arm A includes one redundant cell 10 and N cells 10 can generate the voltage of each arm A. Two or more redundant cells 10 may be provided.

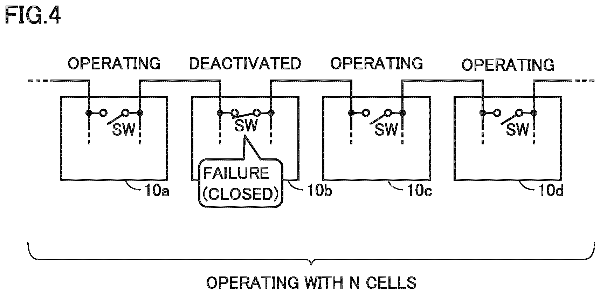

Fig. 3 shows states of cells 10a to 10d among N+1 cells 10 in arm A1. In each cell, switch SW is in the off state and each cell is normally operating. It is assumed that cell 10b fails in this state. Fig. 4 is a diagram illustrating an operating state of the power conversion device when abnormality occurs in one cell in the arm.

Control device 120 provides the on command (which is also referred to as a "closing command") to switch SW in cell 10b that has failed in arm A1. Switch SW is thus turned on and cell 10b is deactivated.

When control device 120 detects deactivated cell 10, it has MMC 110 continue operating with cells 10 other than deactivated cell 10 in the arm including deactivated cell 10.

Specifically, when control device 120 detects turn-on of switch SW and deactivation of cell 10b, cell 10b is disconnected. Control device 120 thus controls other cells including cells 10a, c, and d to generate the voltage of arm A1 and has power conversion device 100 continue operating. Since redundant cell 10 is included, power conversion device 100 can continue operating with other cells 10 even when one cell 10 is deactivated.

In the present embodiment, control device 120 detects various types of abnormality such as a short-circuiting fault of a switching element in main circuit 30, a failure of any circuit in control circuit 32, an abnormal value of voltage VC, or occurrence of abnormality in communication with I/F circuit 48 (failure in reception of a signal for a prescribed time period or longer). When the control device 120 detects such abnormality between the control device 120 and control circuit 32 (including I/F circuit 48), it transmits the on command to turn on switch SW to control circuit 33 (including I/F circuit 49). Switch SW is thus turned on and cell 10 is deactivated. Furthermore, control device 120 can monitor switch SW for the on state with control circuit 33 being interposed.

In an example where cell 10 includes only a single I/F circuit, when abnormality of communication between this I/F circuit and control device 120 occurs, a failure of a circuit or the like cannot be detected. In this case, the on command to switch SW cannot be transmitted.

In the present embodiment, a dedicated route to switch device 52, that is, I/F circuit 49 (control circuit 33), is provided, so that abnormality such as a failure can be sensed. In addition, three functions of "transmission of the on command to switch SW," "deactivation of cell 10 by an operation of switch SW," and "monitoring for deactivation of cell 10 by control device 120" are performed to ensure continued operations of power conversion device 100.

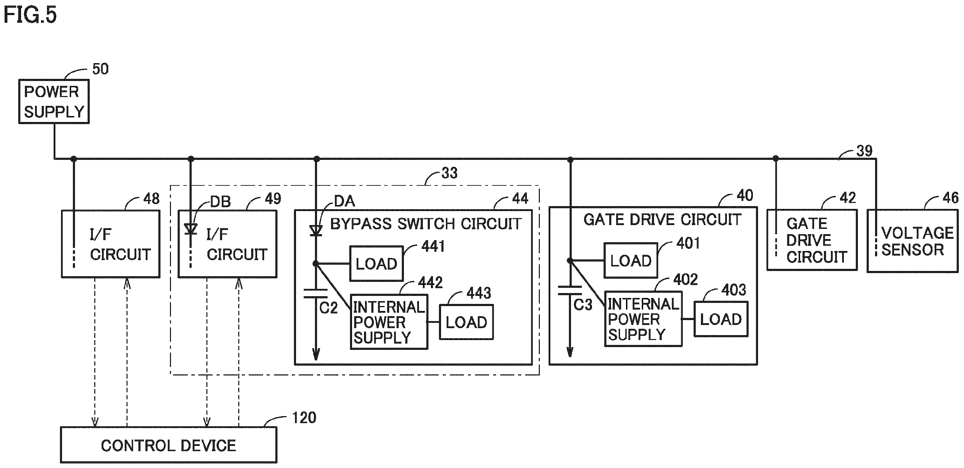

Supply of electric power to control circuits 32 and 33 in cell 10 shown in Fig. 2 will now be described. Fig. 5 is a diagram for illustrating supply of electric power to control circuits 32 and 33 in cell 10 shown in Fig. 2. Fig. 5 shows cell 10 in Fig. 2 in a simplified manner.

Power supply 50 supplies electric power to control circuit 32 and control circuit 33. As described above, control circuit 32 includes gate drive circuits 40 and 42, voltage sensor 46, and I/F circuit 48. Control circuit 33 includes bypass switch circuit 44 and I/F circuit 49. I/F circuits 48 and 49 communicate with control device 120.

In the present embodiment, a circuit included in control circuit 33 is provided with a diode (which is also referred to as a "backflow prevention diode"). The backflow prevention diode includes a diode DA (which is also referred to as a "first diode") and a diode DB (which is also referred to as a "second diode"). In a line through which electric power is supplied from power supply 50 to bypass switch circuit 44, diode DA having an anode connected to an output node of power supply 50 and a cathode connected to a power supply 50 input node of bypass switch circuit 44 is provided and a smoothing capacitor C2 is provided ahead.

Bypass switch circuit 44 includes, for example, a load 441, and load 441 is supplied with electric power from power supply 50. Bypass switch circuit 44 includes an internal power supply 442 and a load 443, and load 443 may be supplied with electric power through internal power supply 442.

In bypass switch circuit 44, energy is stored in smoothing capacitor C2 through diode DA. For example, even when a short-circuiting fault occurs and this line is entirely unavailable, in bypass switch circuit 44 including the backflow prevention diode, power can be supplied to the circuit with the use of energy stored in smoothing capacitor C2.

In a line through which electric power is supplied from power supply 50 to I/F circuit 49, diode DB having an anode connected to the output node of power supply 50 and a cathode connected to a power supply 50 input node of I/F circuit 49 is provided. Though not shown, I/F circuit 49 also similarly includes a smoothing capacitor and a load. I/F circuit 49 also performs a function similar to that of bypass switch circuit 44.

Gate drive circuit 40 also includes, for example, a smoothing capacitor C3, a load 401, an internal power supply 402, and a load 403. Though gate drive circuit 40 is configured not to include a backflow prevention diode in the present embodiment, it may include a backflow prevention diode similarly to bypass switch circuit 44. Gate drive circuit 42 and voltage sensor 46 are also similar to gate drive circuit 40.

As described above, control circuit 33 (bypass switch circuit 44 and I/F circuit 49) includes diodes DA and DB, so that electric power can be supplied to control circuit 33 even on the occurrence of abnormality and the command can be provided to switch SW and the state of switch SW can be monitored. Operations of power conversion device 100 can thus more reliably continue.

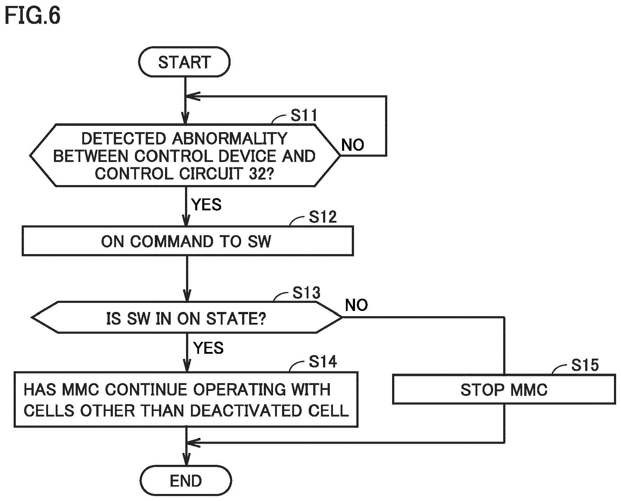

A flow of a process on the occurrence of abnormality such as a failure in main circuit 30 will now be described with reference to a flowchart. Fig. 6 is a flowchart for illustrating a process when abnormality occurs in main circuit 30. The present process may be performed, for example, periodically. A "step" is also simply referred to as "S" below.

When the process is started, in S11, control device 120 determines whether or not abnormality has been detected between control device 120 and control circuit 32. When control device 120 determines that abnormality has been detected between control device 120 and control circuit 32 (YES in S11), the process proceeds to S12. When control device 120 does not determine that abnormality has been detected between control device 120 and control circuit 32 (NO in S11), the process returns to S11. Thus, when abnormality is detected between control device 120 and control circuit 32, the process proceeds to S12.

In S12, control device 120 provides the on command to switch SW and the process proceeds to S13. In S13, control device 120 determines whether or not switch SW is in the on state. When control device 120 determines that switch SW is in the on state (YES in S13), the process proceeds to S14. Thus, when SW is in the on state, the process proceeds to S14. When control device 120 does not determine that switch SW is in the on state (NO in S13), it stops MMC 110 (S15) and quits the present process.

In S14, control device 120 has MMC 110 continue operating with cells 10 other than deactivated cell 10 and quits the present process.

As described above, in the present embodiment, in unit converter 10 to which a power supply method of main circuit power feed is applied, a circuit (control circuit 33) associated with switch SW necessary for deactivation of unit converter 10 is independent of a circuit (control circuit 32) responsible for other control and protection functions. Immediate power loss of the circuit associated with switch SW is prevented also on the occurrence of a short-circuiting fault in other circuits. Furthermore, a dedicated route for providing a command to switch SW and obtaining the state of switch SW is provided to ensure connection to upper level control device 120.

According to such a configuration, even when abnormality occurs in a portion other than a circuit associated with switch SW, processing for deactivating unit converter 10 and monitoring for deactivation can reliably be performed. Thus, even when a failure occurs in certain unit converter 10 in power conversion device 100 including arms A1 to A6 configured with a plurality of unit converters 10 connected in series, operations of power conversion device 100 can more reliably continue.

### [Modification of Power Conversion Device]

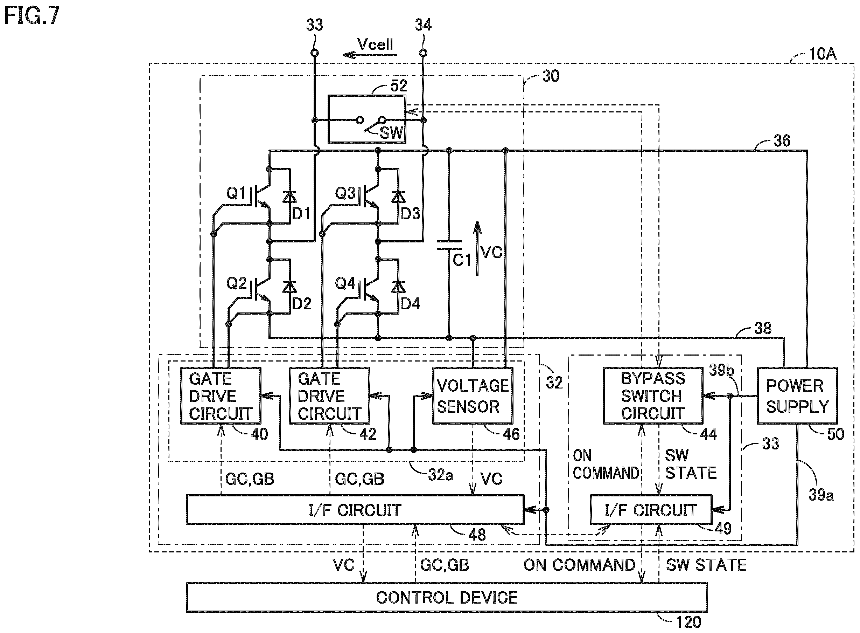

Cell 10 shown in Fig. 1 may be configured as below. Fig. 7 is a diagram showing another exemplary configuration of cell 10 shown in Fig. 1. A cell 10A shown in Fig. 7 is the same in basic configuration as cell 10 shown in Figs. 2 and 5, however, it is different in system of supply of electric power to control circuits 32 and 33. In cell 10 shown in Figs. 2 and 5, control circuits 32 and 33 are each supplied with electric power through a line 39 from power supply 50.

On the other hand, cell 10A includes a line 39a (which is also referred to as a "first line") and a line 39b (which is also referred to as a "second line"). Line 39a is a line for supply of electric power from power supply 50 to control circuit 32. Line 39b is a line for supply of electric power from power supply 50 to control circuit 33.

Thus, for example, even when a short-circuiting fault occurs and the line from power supply 50 to control circuit 32 becomes unavailable, electric power can be supplied to control circuit 33 (bypass switch circuit 44 and I/F circuit 49) and hence the command to switch SW can be provided and the state of switch SW can be monitored. Operations of power conversion device 100 can thus more reliably continue.

Though bypass switch circuit 44 and I/F circuit 49 are not configured to include diodes A and B in the example in Fig. 7, they may include the diodes.

Though three-phase MMC 110 interconnected with the three-phase AC power grid is illustrated as the power converter in the embodiment described above, the present invention is also applicable to a single-phase MMC interconnected with a single-phase power grid or an MMC that drives a motor. Though the present invention illustrates a double Y-connection MMC configured such that six single-phase converters each composed of a serial body of a reactor and an arm composed of one or more cascaded cells are doubly Y-connected, the present invention is also applicable to a delta-connection MMC configured such that three such single-phase converters are delta-connected or to a Y-connection MMC configured such that three such single-phase converters are Y-connected.

### [Main Configuration and Effects]

A main configuration and effects of the embodiment described previously will be described below.
(1) Power conversion device 100 includes modular multilevel converter (MMC) 110 and control device 120. MMC 110 includes arms A1 to A6 each configured with a plurality of cells (unit converters) 10 connected in series. Control device 120 controls MMC 110. Each of the plurality of cells 10 includes main circuit 30, switch device 52, control circuit 32 (which is also referred to as the "main circuit control circuit"), and control circuit 33 (which is also referred to as the "switch control circuit"). Main circuit 30 includes switching elements Q1 to Q4 and the DC capacitor. Main circuit 30 outputs a voltage pulse in accordance with a voltage of the DC capacitor based on on and off of switching elements Q1 to Q4. Switch device 52 includes switch SW configured to cause short-circuiting of output terminals of main circuit 30 by being turned on. Switch device 52 outputs the on and off states of switch SW. Control circuit 32 is configured to transmit a voltage detection value of the DC capacitor to control device 120 and to control on and off of switching elements Q1 to Q4 in accordance with a control signal received from control device 120. Control circuit 33 is configured to turn on switch SW when it receives the on command to turn on switch SW from control device 120 and to transmit the on and off states of switch SW to control device 120. When control device 120 detects abnormality between control device 120 and control circuit 32 in any cell 10 of the plurality of cells 10, it transmits the on command to turn on switch SW to control circuit 33 of cell 10 where abnormality has been detected. Thus, even when a failure occurs in one unit converter 10 in power conversion device 100 including the arms each configured with the plurality of unit converters 10 connected in series, operations of power conversion device 100 can more reliably continue.
(2) Control circuit 32 is configured with control circuit 32a (which is also referred to as the "first control circuit") that controls main circuit 30 and I/F circuit 48 (which is also referred to as the "first interface circuit") that relays communication between control circuit 32a and control device 120. Control circuit 33 is configured with bypass switch circuit 44 (which is also referred to as the "second control circuit") that controls switch device 52 and I/F circuit 49 (which is also referred to as the "second interface circuit") that relays communication between bypass switch circuit 44 and control device 120. Thus, even when control circuit 32a fails or abnormality of communication with control circuit 32a occurs, operations of power conversion device 100 can continue.
(3) Each of the plurality of cells 10 further includes power supply 50, diode DA (which is also referred to as the "first diode"), and diode DB (which is also referred to as the "second diode"). Power supply 50 supplies electric power to control circuit 32 and control circuit 33. Diode DB is provided on the line through which electric power is supplied from power supply 50 to bypass switch circuit 44, and diode DB has the anode connected to the output node of power supply 50 and the cathode connected to the power supply 50 input node of bypass switch circuit 44. The second diode is provided on the line through which electric power is supplied from power supply 50 to I/F circuit 49, and the second diode has the anode connected to the output node of power supply 50 and the cathode connected to the power supply 50 input node of I/F circuit 49. By thus providing diodes DA and DB for backflow prevention, electric power can be supplied to control circuit 33 (bypass switch circuit 44 and I/F circuit 49) and hence operations of power conversion device 100 can more reliably continue.
(4) Each of the plurality of cells 10A includes power supply 50, line 39a (which is also referred to as the "first line"), and line 39b (which is also referred to as the "second line"). Power supply 50 supplies electric power to control circuit 32 and control circuit 33. Line 39a is the line for supply of electric power from power supply 50 to control circuit 32. Line 39b is the line for supply of electric power from power supply 50 to control circuit 33. Thus, even when abnormality (failure) occurs in control circuit 32, electric power can be supplied to control circuit 33 (bypass switch circuit 44 and I/F circuit 49) and hence operations of power conversion device 100 can more reliably continue.
(5) When control device 120 receives notification that switch SW is in the on state in any cell 10 of the plurality of cells 10 from control circuit 33, it has MMC 110 continue operating with a plurality of cells 10 except for cell 10 where switch SW is in the on state. Thus, cell 10 where abnormality (failure) has occurred can be disconnected and operations of power conversion device 100 can continue with a plurality of normal cells 10.

It should be understood that the embodiment disclosed herein is illustrative and non-restrictive in every respect. The scope of the present disclosure is defined by the terms of the claims rather than the description above and is intended to include any modifications within the scope and meaning equivalent to the terms of the claims.

### REFERENCE SIGNS LIST

1 AC power grid; 2 three-phase transformer; 3a positive voltage terminal; 3b negative voltage terminal; 3c to 3c AC terminal; 4 load; 10, 10A unit converter (cell); 30 main circuit; 32, 32a, 33 control circuit; 33 first terminal; 34 second terminal; 36 positive electrode line; 38 negative electrode line; 39, 39a, 39b line; 40, 42 gate drive circuit; 44 bypass switch circuit; 46 voltage sensor; 48, 49 I/F circuit; 50 power supply; 52 switch device; 100 power conversion device; 110 MMC; 120 control device; 401, 403, 441, 443 load; 402, 442 internal power supply; A1 to A6 arm; C1 to C3 DC capacitor; L1 to L6 reactor; GC gate signal; GB gate block signal; Q1 to Q4 switching element; D1 to D4, DA, DB diode; SW switch; DCOV1 threshold voltage

## Claims

1. A power conversion device comprising:
a power converter including an arm configured with a plurality of unit converters connected in series; and
a control device that controls the power converter, wherein
each of the plurality of unit converters includes
a main circuit including a switching element and a DC capacitor, the main circuit outputting a voltage pulse in accordance with a voltage of the DC capacitor based on on and off of the switching element,
a switch device including a switch configured to cause short-circuiting between output terminals of the main circuit by being turned on, the switch device outputting on and off states of the switch,
a main circuit control circuit configured to transmit a voltage detection value of the DC capacitor to the control device and to control on and off of the switching element in accordance with a control signal received from the control device, and
a switch control circuit configured to turn on the switch when the switch control circuit receives an on command to turn on the switch from the control device and to transmit the on and off states of the switch to the control device, and
when the control device detects abnormality between the control device and the main circuit control circuit in any unit converter of the plurality of unit converters, the control device transmits the on command to turn on the switch to the switch control circuit of the unit converter where the abnormality has been detected.

2. The power conversion device according to claim 1, wherein
the main circuit control circuit is configured with a first control circuit that controls the main circuit and a first interface circuit that relays communication between the first control circuit and the control device, and
the switch control circuit is configured with a second control circuit that controls the switch device and a second interface circuit that relays communication between the second control circuit and the control device.

3. The power conversion device according to claim 2, wherein
each of the plurality of unit converters further includes
a power supply that supplies electric power to the main circuit control circuit and the switch control circuit,
a first diode provided on a line through which electric power is supplied from the power supply to the second control circuit, the first diode having an anode connected to an output node of the power supply and a cathode connected to a power supply input node of the second control circuit, and
a second diode provided on a line through which electric power is supplied from the power supply to the second interface circuit, the second diode having an anode connected to the output node of the power supply and a cathode connected to a power supply input node of the second interface circuit.

4. The power conversion device according to claim 1 or 2, wherein
each of the plurality of unit converters includes
a power supply that supplies electric power to the main circuit control circuit and the switch control circuit,
a first line through which electric power is supplied from the power supply to the main circuit control circuit, and
a second line through which electric power is supplied from the power supply to the switch control circuit.

5. The power conversion device according to any one of claims 1 to 4, wherein when the control device receives notification that the switch is in an on state in any unit converter of the plurality of unit converters from the switch control circuit, the control device has the power converter continue operating with the plurality of unit converters except for the unit converter where the switch is in the on state.
